# EUROPEAN PATENT APPLICATION

(11) **EP 1 569 366 A2**
(43) Date of publication of application: **31.08.2005**
(21) Application number: 04022184.8
(22) Date of filing: 17.09.2004
(51) Int. Cl.: H04B 10/10

(54) **Wireless signal transmitting and receiving system**

(30) Priority: 25.02.2004 US 784935
(71) Applicant: AmTRAN Technology Co. Ltd., Tapei, Taiwan (TW); Tzeng, Paul, Taiwan (TW)
(72) Inventor: Tzeng, Paul, Jungli, Taoyuan, Taiwan (TW); Wu, Alpha, c/o AmTRAN TECHNOLOGY Co., LTD., Chung Ho City, Taipei, Taiwan (TW)
(74) Representative: Wagner, Bernhard Peter

(57) **Abstract**

A wireless signal transmitting and receiving system is disclosed to be applied to a display device thereby receiving wireless signals omni directionally. The system includes a plurality of transmitting units for sending optical signals via optical beams, and a plurality of receiving units for collecting the redundant optical signals and combining the signals to a single optical signal for conversion into an electrical signal for further processing. The object of the system is to solve the weak signal strength problems caused by moving obstacles between the transmitting units and the receiving units or when the optical signal is reflected or deflected.

## Description

### BACKGROUND OF THE INVENTION

### Field of Invention

The invention relates to transmit video and audio signals in multiple analog and digital formats wirelessly by optical means with provisions to counter signal interruptions and provide easy optical alignment.

### Related Art

With the advent of High Definition Television (HDTV) and increasing use of high resolution color graphics and "streaming video" in computer display data, there has emerged a need to transport large amounts of data at high speed from a variety of source devices to display devices. The traditional means of this transmission has been use of "video-grade" single conductor or twisted pair wires, but with data rates approaching or exceeding 1 Gb/s, transporting signals without errors or severe distortion is difficult. Particularly in the case of HDTV's where marketing research has lead to devices which are intended to bear a resemblance to large hanging paintings, there is a strong desire to keep the numbers of visible signal wires to a minimum for aesthetic reasons.

The traditional means of wireless video/graphics transmission has been to use a modulated Radio-Frequency (RF) signal, but current national and international frequency allocations for other than Television channels restricts transmission to frequency bands which will not support the information bandwidth needed for "real-time" video/graphics. To overcome this limitation, information compression techniques such as those standardized in the MPEG series must be used, which leads to some degradation in the picture quality as a reduction of as much as 1/200 times of the original information content. Nevertheless, the availability of MPEG compression electronics and the ease of set-up and use of RF wireless units have resulted in the commercialization of these devices at the expense of picture quality and/or transmission speed.

To attempt to deliver high resolution video/graphics without the losses associated with information compression, optical wireless units have been designed to transport video and graphics. However, these devices have relied on optical beams which are susceptible to be blocked by the passage of the human body between the transmitter and receiver. Also, they have used automatic beam aiming means to direct the otherwise invisible infrared laser beam used for transmission. Techniques used with audio information transmission to address the problem of blockage by allowing the optical signal to scatter from surfaces in the environment and arrive at the receiver via multiple paths which are not blocked cannot be used for video/graphics transmission. This is because the arrival of the part of the original signal which follows multiple paths are delayed relative to that part which travels directly between transmitter and receiver by about one nano-second per foot English measure of path length difference, leading to "smearing" of the data pulses far beyond their original pulse width of 1-10 nano-seconds.

### SUMMARY OF THE INVENTION

The present invention alleviates the problem of beam blockage by using multiple beams transmitting to their respective receivers, each carrying the same signal and which are physically separated by enough distance that the probability of all beams being blocked simultaneously is very small. As an extension of this concept, this invention could also be realized by coalescing multiple beams into a single beam and multiple receive apertures into a single receiver where at least one dimension is large enough that complete beam blockage is unlikely.

Further scope of applicability of the present invention will become apparent from the detailed description given hereinafter. However, it should be understood that the detailed description and specific examples, while indicating embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given in the illustration below only, and thus are not limitative of the present invention, and wherein:
Fig. 1 is the System Block Diagram showing associated components required for the invention;
Fig. 2 is the first embodiment illustrating the elements of the multiple beam realization of the invention and illustrating their relationship to each other;
Fig. 3 is the second embodiment illustrating the elements of an alternate multiple receiver realization of the invention; and
Fig. 4 is the third embodiment illustrating the elements of the large single beam and receiver realization of the invention.

### DETAILED DESCRIPTION OF THE INVENTION

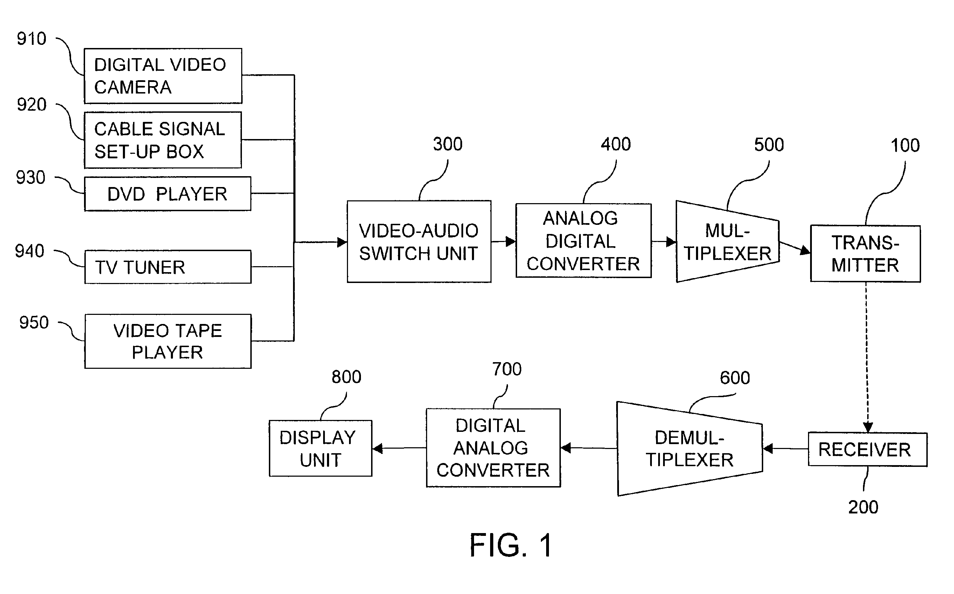

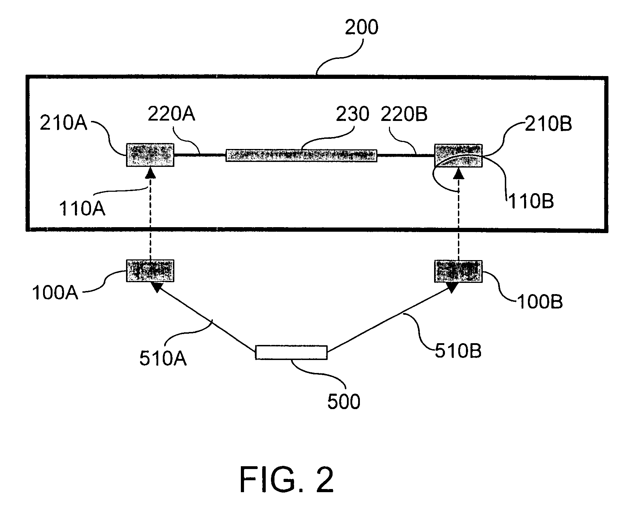

Refer to Fig 1 first for describing the system. Multiple signal sources to be transmitted to the display unit 800, such as signals from video cameras 910, set-top boxes 920, DVD players 930, TV tuners 940, video tape players 950 and the like are selected for transmission by the video-audio switch unit 300. The signals are conditioned, if necessary, by the "analog/Digital converter'' 400 since the native format of optical information transmission is expected to be digital. Although analog modulation of the beam is another consideration, more technical challenges occur. Signals from multiple sources are combined if desired by the multiplexer 500 which also performs data operations such as adding information for parity checking or other sorts of error checking at the receiver 200 and for "framing" the data for serial transmission. The resultant data stream is applied to the transmitter 100 which consists of one or more separate units which transmit identical data as illustrated in Fig. 2. The transmitting units contain beam forming optics which may be covered by a subsequent disclosure.

The receiver 200, which is designed to have wide receiving angle to receive high speed data, consists of one or more separate units which receive the data. Each receiver contains beam collection optics to relay the beam to the photodiode 230 as illustrated in Figure 2. The resultant electrical signal from the receiver 200 is applied to the demultiplexer 600 which separates the transmitted signals from the additional information and performs other data operations, such as recovering the data clock as a timing reference for subsequent data operations, error checking and correction and converting the serial data stream to appropriately formatted parallel data. The recovered data is conditioned, if necessary, for input to the display unit 800 by the digital/analog converter 700.

Refer to Fig. 2, redundant signal information 510A and 510B from multiplexer 500 is sent to a plurality of separate transmitting units 100A and 100B in the transmitter 100, which are physically separated from each other and contain beam forming optics as mentioned previously. These units 100A and 100B emit separate beams 110A and 110B which are received by a plurality of separate receiving units 210A and 210B in the receiver 200 located exterior to the display unit 800. The receiving units 210A and 210B contain beam collection optics and deliver the optical signals 220A and 220B to a single photodiode 230. The optical signals 220A and 220B are then converted into electrical signals and relayed to 600 for further processing.

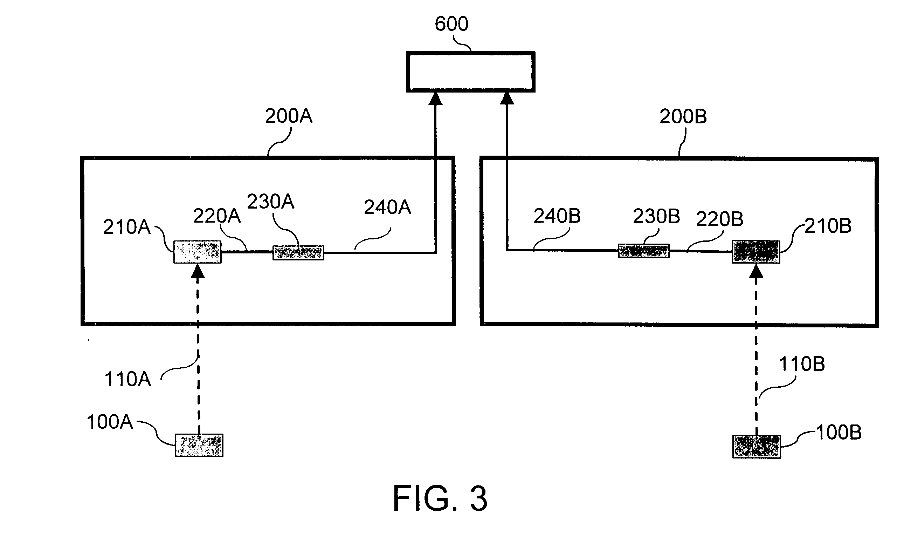

Please refer to Fig. 3 illustrating the second embodiment of the invention. The receiving units 210A, 210B containing beam collection optics and photodiodes 230A, 230B are implemented in two independent receiving units 200A, 200B. These receiving unit 200A, 200B send electrical signals 240A from photodiode 230A and 240B from the photodiode 230B representing the redundant data sent from the separate transmitting units 100A and 100B to the de-multiplexer 600. The de-multiplexer 600 either combines the electrical signal 240A from the receiving unit 200A and the electrical signal 240B from the receiving unit 200B into a single composite signal for further processing or selects one of the electrical signals to be used for further processing based on some measure of signal integrity such as the number of errors or the strength of the received signal.

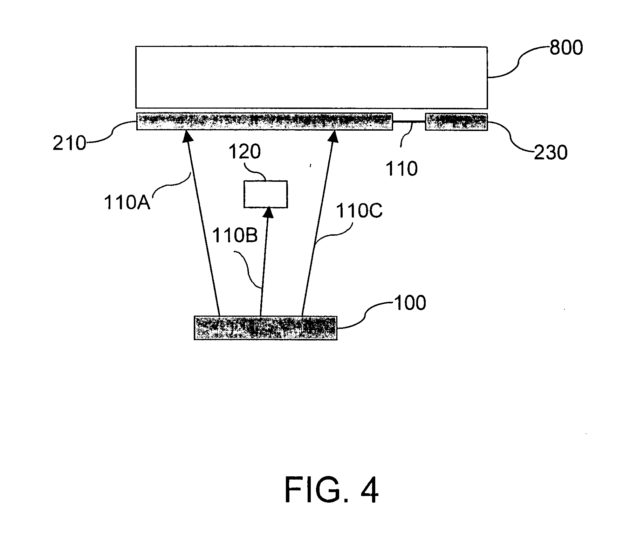

Fig. 4 illustrates the third embodiment of the invention, where the separate transmitters, beams and receivers are combined into one single entity. The transmitter 100 delivers the optical signals 110A, 110B, 110C in beam form which is large in at least one of it's dimensions. The optical signals 110A, 110B, 110C are collected by a single large optic 210 which transmits the optical signals to a photodiode 230 and associated electronics. The obstacle 120 blocks part of the beam 110B but other parts 110A and 110C transmit successfully to the receiver 210. In order for the collected optical signal pulses to maintain their shape, the beam 110A, 110B, 100C must be of low enough divergence that all ray paths within the beam do not experience an optical path length difference from each other less than one foot. Also, the collection optics 210 must satisfy the same requirement on optical path difference from the collection point to the photodiode. If filters are implemented in the system, the distance requirement of the optical path is not necessary.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A wireless signal transmission and receiving system applied for a display device for receiving wireless signals omni directionally, comprising:
a plurality of transmitting units for sending optical signals via optical beams; and
a plurality of receiving units for collecting the redundant optical signals and combining the signals to a single optical signal for conversion into an electrical signal for further processing.

2. The system of claim 1, wherein each of the receiving units further comprises a photodiode for converting the single optical signal into the electrical signal.

3. The system of claim 1, wherein the transmitting units further comprises beam forming optics.

4. The system of claim 1, wherein the receiving units further comprises beam collecting optics.

5. The system of claim 1, wherein the optical signals are converted from audio and video source devices.

6. The system of claim 1, wherein the optical signals are converted from computers.

7. The system of claim 1, wherein the optical signals are analog in nature.

8. The system of claim 1, wherein the optical signals are digital in nature.
